# EUROPÄISCHE PATENTANMELDUNG

(11) **EP 1 288 175 A2**
(43) Veröffentlichungstag der Anmeldung: **05.03.2003**
(21) Anmeldenummer: 02019234.0
(22) Anmeldetag: 27.08.2002
(51) Int. Cl.: C04B 24/06, C04B 22/10

(54) **Schnellzement-Bindemittelmischung**

(30) Priorität: 27.08.2001 DE 10141864
(71) Anmelder: Dyckerhoff AG, 65203 Wiesbaden (DE)
(72) Erfinder: Wihler, Horst-Dieter, Dr., 53757 St. Augustin (DE); Umlauf, Reinhard, Dr., 65193 Wiesbaden (DE); Mitkova, Darina, Dr., 55276 Oppenheim (DE)
(74) Vertreter: Solf, Alexander, Dr.

(57) **Zusammenfassung**

Die Erfindung betrifft eine Schnellzement-Bindemittelmischung zur Herstellung verzögerter, schnellerhärtender Betone oder Mörtelmischungen, insbesondere mit erhöhter Strukturviskosität, bestehend aus
a) mindestens einer sulfatträgerfreien, hydraulischen Calciumaluminate und/oder Calciumaluminatferrite enthaltenden Bindemittelkomponente,
b) einer Monocarboaluminathydrat, insbesondere Calciummonocarboaluminathydrat bildenden Zusatzmittelkombination bestehend aus
   b1) mindestens einer Gluconkomponente,
   b2) mindestens einer wasserlöslichen, Carbonationen spendenden Verbindungskomponente.

Die Erfindung betrifft ferner die Verwendung der Schnellzement-Bindemittelmischung.

## Beschreibung

Die Erfindung betrifft eine Schnellzement-Bindemittelmischung, insbesondere für einen schnellerhärtenden Mörtel oder Beton für z.B. Verkehrsflächen mit einer einstellbaren Verarbeitungszeit des Frischmörtels oder -betons.

Aus der DE 42 42 107 C1 ist eine schnellerhärtende Bindemittelmischung und deren Verwendung bekannt. Diese Mischung enthält Portlandzement, das ist ein Zement der aus Portlandzementklinker und mindestens einem Sulfatträger gemeinsam ermahlen wurde mit einer Feinheit von 2.500 bis 20.000 cm²/g nach Blaine und mit einer aufeinander abgestimmten Mischung von anorganischem Beschleuniger, organischem Verzögerer für die Calciumsilikate und organischem Verzögerer für Calciumaluminatsulfate. Diese Druckschrift lehrt, dass gipsfreie oder sulfatträgerfreie Mischungen den Nachteil haben, dass sie aufgrund vieler Nebenreaktionen nicht beherrschbar sind. Als Zusatzmittel sollen insbesondere Ligninsulfonsäuren sowie Oxicarbonsäuren und als Beschleuniger ein Alkalicarbonat enthalten sein.

Aus der DE 196 33 447 A1 ist eine schnellerhärtende hydraulische Bindemittelmischung bekannt, die einen Portlandzementklinker mit hohem Sulfatwiderstand, einen anorganischen Abbindebeschleuniger sowie einen Erstarrungsverzögerer umfasst, wobei der Portlandzementklinker einen Tonerdemodul <0,64 aufweisen soll. Der verwendete Portlandzementklinker wird mit den wesentlichen Bestandteilen der Grundmischung vermahlen. Z.B. wird ein Anteil von 95 bis 99,4 Masse-% Portlandzementklinker mit Alkalicarbonat als Abbindebeschleuniger, einem Zweikomponentenverzögerer sowie Calciumcarbonat als Füllstoff bis auf Mahlfeinheiten von 3.000 bis 8.000 bzw. 8.000 bis 20.000 cm²/g vermahlen. Die Erstarrung kann bis zu einer Stunde verzögert werden, wobei die Verarbeitungszeiten zwischen 30 und 90 Minuten liegen. Nachteilig ist, dass hohe Festigkeiten nur bei kurzen Verarbeitungszeiten erzielbar sind.

Der gleiche Nachteil ergibt sich bei gipsfreien Spezialzementen, die in "baustoffindustrie 1990", 4 (Juli) beschrieben werden und die Sulfitablauge und Natriumcarbonat als Zusatzmittel enthalten.

Bekannte Beton- und Mörtelmischungen aus Schnellzement-Bindemittelmischungen neigen auf Gefälleflächen dazu, vor dem Erhärten abzufließen, weil ihre Strukturviskosität nicht ausreicht, sie formstabil auf Gefälleflächen zu halten. Die Strukturviskosität ist eine scheinbare Viskosität, die durch Bewegungen beeinflusst wird, indem das Material in Ruhe steif ist und durch Bewegung leichtflüssig wird.

Aufgabe der Erfindung ist, eine Schnellzement-Bindemittelmischung zu schaffen, mit der Beton- oder Mörtelmischungen hergestellt werden können mit einer Verarbeitungszeit bis etwa zwei Stunden und einer schnellen Erhärtung auf nahezu Endfestigkeiten nach etwa sechs bis zwölf Stunden. Außerdem sollen die Frischbeton- und Frischmörtelmischungen eine höhere Strukturviskosität aufweisen, so dass sie auf Gefällestrecken nicht ablaufen.

Diese Aufgabe wird mit einer Schnellzement-Bindemittelmischung mit den Merkmalen des Anspruchs 1 gelöst. Vorteilhafte Weiterbildungen der Erfindung sind in den Unteransprüchen gekennzeichnet.

Die erfindungsgemäß ausgewählten hydraulischen sulfatträgerfreien Bindemittelkomponenten reagieren mit einer Zusatzmittelkombination, die zwingend mindestens eine der folgenden Verbindungen aufweist: Eine Gluconsäurekomponente wie Gluconsäure, die Salze der Gluconsäure, insbesondere Natriumgluconat, Natrium-Glucoheptonat, Natrium-Glucoheptonat-Anhydrat sowie Glucono-delta-Lacton. Es gibt sicherlich auch noch andere Verbindungen der Gluconsäure, mit denen die gleiche Wirkung erzielt werden kann.

Die Zusatzmittelkombination enthält des weiteren zwingend mindestens eine im Anmachwasser einer Frischbetonmischung oder Frischmörtelmischung leicht lösliche, sehr schnell Carbonationen abgebende Verbindungskomponente. Diese Eigenschaften gewährleisten insbesondere Alkalicarbonate und Alkalihydrogencarbonate, die bevorzugt verwendet werden.

Darüber hinaus enthält die Zusatzmittelkombination vorzugsweise noch eine Erstarrungs- und Erhärtungsbeschleunigerkomponente, die nach Ablauf der voreingestellten Verarbeitungsdauer zum schnellen Erstarren und Erhärten führt. Hierzu eignen sich bekanntermaßen auch insbesondere die Alkalicarbonate und/oder Alkalihydrogencarbonate.

Die Alkalicarbonate bzw. Alkalihydrogencarbonate spielen somit eine Doppelrolle. Sie dienen zunächst als Carbonationendonor und initiieren eine Calciummonocarboaluminathydratgelbildung und/oder -kristallitbildung auf den Bindemittelkörnchen, die unmittelbar nach der Initiierung von der Gluconsäurekomponente eine vorbestimmte Zeit unterbunden oder gehemmt wird. Nach dieser Hemmung entwickelt der Erstarrungs- und Erhärtungsverzögerer seine Wirkung und führt zum schnellen Erstarren und Erhärten des Betons bzw. des Mörtels in z.B. 6 bis 18, insbesondere in 9 bis 12 Stunden (Calciummonocarboaluminathydrat (C₄ACH₁₁) wird im Folgenden auch Monocarboaluminat und Monocarboaluminathydrat genannt).

Erfindungsgemäß wird einem sulfatträgerfreien, mindestens ein Calciumaluminat und/oder Calciumaluminatferrit aufweisenden Zementklinkermehl, insbesondere einem sulfatträgerfreien Portlandzementklinkermehl, eine Zusatzmittelkombination z.B. aus Gluconsäure und/oder deren Salze und/oder Glucono-delta-Lacton und mindestens einem Alkalicarbonat oder Alkalihydrogencarbonat zugesetzt und die Mischung als Schnellstzement-Bindemittelmischung verwendet. Vorzugsweise werden keine weiteren Zusatzmittel zugesetzt.

Die ausgewählte Bindemittelkomponente, die vorzugsweise als Klinkerfeinstmehl mit d₉₅ ≤ 24 µm verwendet wird, insbesondere das Zementklinkermehl, wird insbesondere als Zementklinkerfeinstmehl, und insbesondere mit einer Kornfraktion verwendet, die entweder aus einer gesichteten Kornfraktion besteht oder eine Mehrzahl von abgegrenzten Kornfraktionen mit definierten Kornverteilungen aufweist. Wird eine Kornfraktion, z.B. 0-9 µm verwendet, wird diese zweckmäßigerweise derart genau gesichtet, dass die Obergrenze auf 9 ± 0,5 µm genau eingehalten wird. Vorzugsweise beträgt die Obergrenze 12,5 µm.

Wird das Portlandzementklinkermehl mit einem bestimmten Kornband, z.B. 6-9 µm, verwendet, werden die Unter- und die Obergrenze zweckmäßigerweise auf ± 0,5 µm genau eingestellt. Durch die Verwendung eines oder mehrerer Kornbänder bzw. die Verwendung einer oder mehrerer Kornfraktionen lassen sich in Kombination mit der erfindungsgemäßen Zusatzmittelkombination die Verarbeitbarkeit, der Erstarrungsverlauf sowie die Festigkeitsentwicklung steuern.

Die erfindungsgemäße Zusatzmittelkombination bewirkt insbesondere keine verflüssigende Wirkung, sondern vielmehr in überraschender Weise eine Strukturviskositätserhöhung im Vergleich zu bekannten, mit Wasser angemachten verzögerten Betonen oder Mörtelmischungen. Der Beton bzw. die mit Wasser angemachte Mörtelmischung steifen ohne die Einwirkung äußerer Kräfte (bis auf die Schwerkraft) derart an, dass die eingebaute Frischbeton- oder Frischmörtelmischung auch bei Gefällestrecken, z.B. bis zu 15% Gefälle, nicht wegläuft. Dies ermöglicht es, erfindungsgemäße Frischmörtel- oder Frischbetonmischungen auch bei Gefällestrecken, insbesondere im Straßenbau einzubauen, ohne dass der Beton der Schwerkraft gehorchend abläuft, was bisher nur mechanisch durch wiederholtes Hochziehen gegen die Schwerkraft verhindert werden konnte. Muss ein Frischbeton während der Erstarrungs- und Erhärtungsphase immer wieder gegen die Schwerkraft hochgezogen, d.h. in die Einbaulage gebracht werden, stört dies unkontrollierbar die Verarbeitungsdauer, den Erstarrungs- und Erhärtungsprozess und führt zu erheblich geringeren Festigkeiten. Außerdem wird die Betonoberfläche durch das Hochziehen häufig derart rauh, dass der Beton - auch um ihn zu nivellieren - abgeschliffen werden muss.

Die Bindemittelmischung, die vorzugsweise 75 bis 95 Masse-% Portlandzementklinkermehl aufweist, enthält insbesondere Gluconsäure bzw. deren Salze. Es hat sich herausgestellt, dass diese Zusatzmittel in Kombination mit einem Alkalicarbonat insbesondere bei sulfatträgerfreien Portlandzementklinkerfeinstmehlen - d.h. ohne Zusatz von Sulfatträgern ermahlenen Portlandzementklinkern - eine genaue Steuerbarkeit der Verarbeitbarkeit ermöglichen, ohne dass Festigkeitseinbußen der erhärteten Betone oder Mörtel auftreten. Durch bestimmte Feinheiten des sulfatträgerfreien Klinkermehls ist es zudem möglich, die Verarbeitbarkeit und Festigkeit noch weitergehend zu steuern. Mit den erfindungsgemäßen Bindemittelmischungen hergestellte Betone oder Mörtel bleiben z.B. 20 bis 220 Minuten nach Zutritt des Wassers verarbeitbar. Nach dem Einbringen eines mit der erfindungsgemäßen Bindemittelmischung hergestellten Betons ergibt sich nach der eingestellten Verarbeitungszeit eine rasche Festigkeitsentwicklung, so dass nach z.B. sechs bis zwölf Stunden die für eine Verkehrsfreigabe geforderten Endfestigkeiten erreicht werden.

Nach einer besonderen Ausführungsform der Erfindung wird der Bindemittelmischung werkseitig lediglich eine z.B. auf 20 °C abgestellte Mindestzusatzmittelmenge zugegeben und eine ggf. erforderliche höhere Menge nach vorgegebenen Kennwerten erst beim Anmischen z.B. des Transportbetons zugemischt. Auf diese Weise kann besonders einfach auf bestimmte umweltbedingte tiefere Temperaturen des Frischbetons beim Transport und/oder beim Einbau auf der Baustelle reagiert werden, denn die Wirkung und damit die Zusatzmittelmenge richtet sich auch nach der Verarbeitungstemperatur.

Nach einer weiteren Ausführungsform der Erfindung wird eine erforderliche Sandfraktion eines Mörtel- oder Betonzuschlagstoffes der Bindemittelmischung bereits werkseitig zumindest zum Teil, insbesondere zum überwiegenden Teil zugegeben. Hiermit kann schwankenden Feuchtigkeitsgehalten von Sanden auf der Baustelle oder in Betonwerken begegnet werden, die den Wasser-/Zementwert und damit die Verarbeitungseigenschaften des Frischbetons oder des Frischmörtels, aber auch deren Endfestigkeiten erheblich beeinträchtigen können. Insbesondere die Sandfraktionen der Betonzuschläge enthalten in erheblichem Maße schwankende Wassermengen, beispielsweise wenn diese Zuschläge im Freien gelagert werden. Dieser Feuchtegehalt des Sandes ist somit sehr stark vom Außenklima abhängig, wodurch durch den Sand unkontrollierte Mengen an Wasser in den Beton oder Mörtel eingebracht werden, die zu unerwünschten Veränderungen führen.

Außerdem verbessert der trockene Sandanteil die Rieselfähigkeit der Bindemittelmischung, so dass die Bindemittelmischung mit dem Sand besser z.B. in Säcke oder Silos abgefüllt und bei der Beton- oder Mörtelherstellung besser dosiert werden kann. Zudem kann eine Sandauswahl getroffen werden, die bestimmte Eigenschaften des Betons oder Mörtels gewährleistet bzw. optimiert.

Im Folgenden werden bevorzugte Inhaltsstoffe der Schnellzement-Bindemittelmischung bzw. des Betons oder Mörtels näher erläutert.

### I. Bindemittelkomponente

Die erfindungsgemäßen Schnellzement-Bindemittelmischungen weisen eine hydraulische, sulfatträgerfreie Calciumaluminate und/oder Calciumaluminatferrite enthaltende Bindemittelkomponente, insbesondere in Feinstmehlform auf. Diese hydraulische, sulfatträgerfreie Bindemittelkomponente kann neben z.B. sulfatträgerfreiem Portlandzementklinkermehl weitere sulfatträgerfreie Zusatzstoffe wie Tonerdeschmelzzementmehl, Hüttensandmehl, Trassmehl, getemperte natürliche Puzzolanmehle, Flugasche und auch andere hydraulische sulfatträgerfreie Bindemittel enthalten. Bevorzugt besteht die Bindemittelkomponente aus sulfatträgerfreiem Portlandzementklinkerfeinstmehl. Die Zugabe von Tonerdeschmelzzementmehl, z.B. in Mengen von 5-15 Masse-% bezogen auf die Bindemittelkomponente, ist insbesondere bei der Verwendung aluminatarmer Klinker von Vorteil. Die erfindungsgemäße Bindemittelkomponente ist sulfatträgerzusatzfrei, insbesondere frei von normalerweise zugesetztem Calciumsulfatdihydrat, Calciumsulfathalbhydrat und/oder Anhydrit (gipsfrei). Zudem wird die Bindemittelkomponente in Form von Feinstmehlen bis zu einem Größtkorn von z.B. 95 % kleiner 24 µm verwendet.

Die Bindemittelkomponente der Bindemittelmischung liegt z.B. in mindestens einer einzelnen Kornfraktion, z.B. mit 0-9 µm, oder in mindestens einem Kornband, z.B. von 6-12,5 µm, vor.

Wird die Bindemittelkomponente beispielsweise mit einer einzelnen Kornfraktion verwendet, wird vorzugsweise ein Größtkorn von 12,5 µm eingestellt. Das Größtkorn bzw. die Obergrenze wird zweckmäßigerweise in allen Fällen auf ±0,5 µm genau gesichtet.

Werden zur Steuerung Bindemittelkomponentenfraktionen oder -bänder verwendet, werden diese beispielsweise wie folgt gesichtet und vorgehalten:

| Klinkermehlfraktionen | Klinkermehlbänder |
|---|---|
| 0 - 6,5 µm | 2 - 6,5 µm |
| 0 - 9 µm | 6 - 12,5 µm |
| 0 - 16 µm | 9 - 16 µm |
| 0 - 24 µm | 16 - 24 µm |

Die Untergrenzen werden bei Kornbändern vorzugsweise auch genau gesichtet auf ± 0,5 µm.

### II. Zusatzmittelkombination

Erfindungsgemäß enthält die Schnellzement-Bindemittelmischung mindestens eine Gluconsäure und/oder mindestens eines ihrer Salze.

Neben diesem Zusatzmittel enthalten die Bindemittelmischungen mindestens ein Alkalicarbonat und/oder Alkalihydrogencarbonat.

Die Zugabemenge an Alkalicarbonat beträgt vorzugsweise 0,5 bis 4 Masse-% bezogen auf die Bindemittelkomponente, z.B. das Portlandzementklinkermehl.

Die Zusatzmittelkombination erfüllt die Aufgabe, eine vorbestimmte Verzögerung des Erstarrens bzw. Gewährleistung einer vorbestimmten Verarbeitungsdauer und danach eine rasche Festigkeitsentwicklung zu bewirken, so dass die mit Wasser angemachte Mörtelmischung bzw. der Frischbeton nach dem Einbau rasch eine derartige Festigkeit entwickelt, dass der daraus hergestellte Baukörper z.B. für den Verkehr oder dergleichen freigegeben werden kann. Die Zugabemengen richten sich nach der gewünschten Verarbeitungszeit und der gewünschten Endfestigkeit.

Erfindungsgemäß werden die die Bindemittelmischungen enthaltenden Betone oder Mörtel verzögert, weil anderenfalls die mit Wasser angemachte Mischung aufgrund ihrer Feinheit und der Abwesenheit von Sulfatträgern wie Gips, Halbhydrat oder Anhydrit sofort erstarren würde.

Offenbar wirkt die Zusatzmittelkombination zunächst verzögernd und strukturviskositätserhöhend und anschließend beschleunigend auf das Erstarren und Erhärten. Die Gluconsäure oder deren Salze werden beispielsweise in Mengen von 0,05-2,5, vorzugsweise von 0,15-1 Masse-% bezogen auf die Bindemittelkomponente, insbesondere das Portlandzementklinkermehl, verwendet.

Die Zusatzmittel werden zweckmäßigerweise in trockener Form, vorzugsweise in einer auf die Bindemittelkomponente abgestimmten gleichen Feinheit zugemischt.

### III. Zusatzstoffe

Die Bindemittelmischung enthält zweckmäßigerweise mindestens einen feingemahlenen, werkseitig zugegebenen mineralischen Zusatzstoff, z.B. in Form von Gesteinsmehlen, wie Trassmehl, Kalksteinmehl, oder getemperte natürliche Puzzolane oder Zeolithe oder Mikrosilika oder Flugasche. Die Zusatzstoffe können in Mengen von z.B. 5-20 Masse-% bezogen auf die Bindemittelmischung enthalten sein. Ihre Feinheit entspricht zweckmäßigerweise der Feinheit der Bindemittelkomponente.

Als Zuschlagstoffe für den Beton werden die übrigen Betonzuschlagstoffe, z.B. nach DIN 4226 oder entsprechenden anderen nationalen Normen, beispielsweise mit einer Sieblinie AB 16 nach DIN 4226 verwendet.

Nach einer bereits oben erwähnten besonderen Ausführungsform der Erfindung enthält eine Werktrockenmischung bereits die erforderliche, vorzugsweise getrocknete Sandkomponente der Zusatzstoffe. Nach einer ebenfalls weiter oben erwähnten Ausführungsform der Erfindung kann die Bindemittelmischung eine "Basismenge" der Zusatzmittel, insbesondere an Gluconsäure und/oder deren Salze in trockener Form enthalten. Zur Aussteuerung besonderer, temperaturbedingter Umgebungs- und Randbedingungen wird bei der Herstellung des Transportfrischbetons oder des Frischmörtels dann ergänzend eine auf eine vorgegebene Temperatur abgestimmte Menge Gluconsäure und/oder deren Salze z.B. im Betonwerk oder auf der Baustelle zugegeben. Derartige Randbedingungen sind beispielsweise die Frischbetontemperatur, die voraussichtliche Fahrzeit, die Temperatur während der Fahrzeit sowie die Temperatur an der Einbaustelle.

Eine Bindemittelmischung nach der Erfindung wird beispielsweise aus den folgenden Bestandteilen zusammengesetzt:

| | | |
|---|---|---|
| 80 - 90, | z.B. 87,8 Gew.-% | Portlandzementklinkerfeinstmehl, |
| 8 - 10, | z.B. 9,0 Gew.-% | Tonerdeschmelzzementfeinstmehl, |
| 2 - 4, | z.B. 3,0 Gew.-% | K₂CO₃/Na₂CO₃, |
| 0,1 - 0,3, | z.B. 0,2 Gew.-% | Natriumgluconat. |

Aus der beispielhaften Bindemittelmischung lässt sich in üblicher Weise ein Beton mit einer offenen Verarbeitungszeit von etwa einer Stunde bei ca. 20 °C herstellen, so dass eine Verfrachtung als Transportbeton vom Transportwerk bis zur Einbaustelle und der Einbau innerhalb dieser Zeit möglich ist. Nach dem Einbau und nach Ablauf der Verarbeitungszeit erhärtet der Beton sehr schnell; es ergeben sich außerdem die vorbestimmten hohen Festigkeiten nach z.B. 6 Stunden.

Erfindungsgemäß wird gewährleistet, dass sich die angemachte Beton- bzw. die angemachte Mörtelmischung im Vergleich zu bekannten Mischungen in erhöhtem Maße strukturviskos verhält. Für den Einbau wird ein mit dieser Mischung hergestellter, strukturviskoser Frischbeton am Einbauort zur Einbaustelle verbracht, eingefüllt und dann z.B. an der Einbaustelle eingerüttelt, wobei durch die Einwirkung von Scherkräften der Beton flüssig und leicht einzuarbeiten ist. Nach dem Rütteln stellt sich sehr schnell eine erhöhte Strukturviskosität ein.

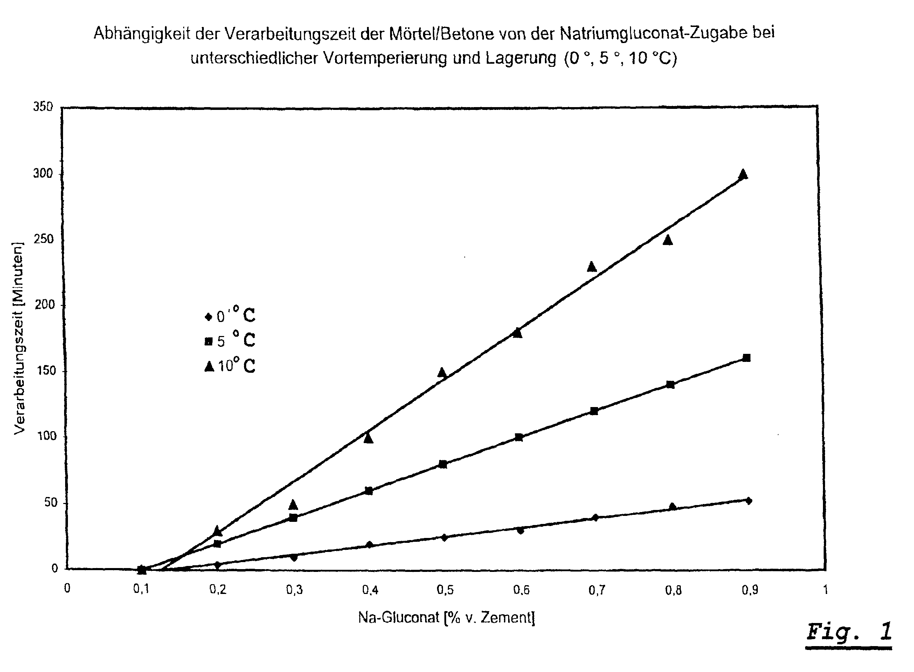

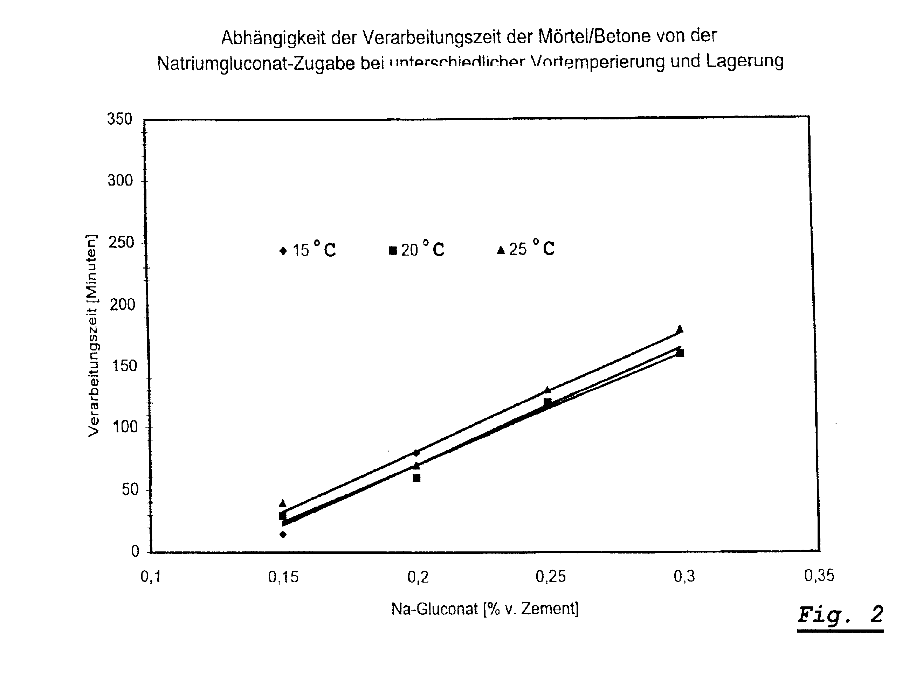

In den Fig. 1, 2 und 3 sind beispielhaft Eigenschaften von aus Bindemittelmischungen hergestellten Betonen dargestellt. Die Figuren 1 und 2 zeigen die Abhängigkeit der Verarbeitungszeit von der Natriumgluconatzugabe bei gleichem Alkalicarbonatgehalt und bei unterschiedlicher Vortemperierung und Lagerung. Die Verarbeitbarkeitsdauer bzw. -zeit ist im Temperaturbereich zwischen 0 und 10 °C sehr stark differenziert (Fig. 1), während die Verarbeitungszeit bei Temperaturen zwischen 15 und 25 °C bei vergleichbarer Natriumgluconatzugabe nur geringfügig schwankt (Fig. 2). Daraus folgt, dass bei niedrigen Temperaturen, beispielsweise bei 0 °C, die Natriumgluconatzugabe entsprechend, z.B. im Betonwerk oder auf der Baustelle, erhöht werden muss, wenn eine auf 20 °C werksseitig eingestellte Werktrocken-Bindemittelmischung verwendet wird, um die erwünschte Verarbeitungszeit, Strukturviskosität, Erstarrung und Festigkeit zu gewährleisten.

Bei den erfindungsgemäßen wasserhaltigen, aus erfindungsgemäßen Bindemittelmischungen hergestellten Frischbetonen oder Frischmörteln ist von Vorteil, dass im Gegensatz zu bekannten vergleichbaren Betonen oder Frischmörteln ein stark erhöhtes strukturviskoses Verhalten auftritt. Unter Strukturviskosität versteht man die der Dilatanz entgegengesetzte Erscheinung, dass die Viskosität von fließenden Stoffen unter dem Einfluss zunehmender Schubspannung τ oder Schergeschwindigkeit D abnimmt. Die Viskositätsabnahme beruht auf der gleichmäßigen Ausrichtung der vorher ungeordneten Molekularknäuel unter dem Einfluss der zunehmenden Schubspannung. Im Unterschied zur Strukturviskosität nimmt bei der verwandten Thixotrophie die Viskosität bei konstanter Schubspannung τ, aber zunehmender Versuchszeit ab.

Beim Mischen oder Eingießen eines erfindungsgemäßen Betons und beim Rütteln wird zunächst die Strukturviskosität überwunden, stellt sich aber danach sofort wieder ein. Dies erleichtert den Einbau auch an Orten mit Gefälle, da der Beton im Ruhezustand nicht "wegläuft", weil sich ohne äußeren Energieeintrag, z.B. durch Rütteln, die Struktur kontinuierlich wieder aufbaut und das System scheinbar erstarrt.

Der Einsatz einer sulfatträgerfreien Bindemittelkomponente, z.B. zumindest enthaltend ein sulfatträgerfreies Portlandzementklinkerfeinstmehl, vorzugsweise mit einer definierten Kornfraktion oder einem definierten Kornband im Feinstbereich, und der erfindungsgemäß ausgewählten Zusatzmittelkombination aus der Gruppe der Gluconsäure bzw. deren Salze mit Alkalicarbonat führt zur Steuerbarkeit der Verarbeitbarkeit, der Strukturviskosität, des Erstarrens und der Früh- und Endfestigkeit. Zudem ist es möglich, mit den Feinheiten der erfindungsgemäßen sulfatträgerfreien Bindemittelmischungen die Verarbeitbarkeit weitergehend zu steuern. Die Frischbetone lassen sich bis z.B. 220 Minuten nach Zutritt des Wassers ohne schädliche Einflüsse auf die Festigkeitsentwicklung im Stundenbereich verarbeiten.

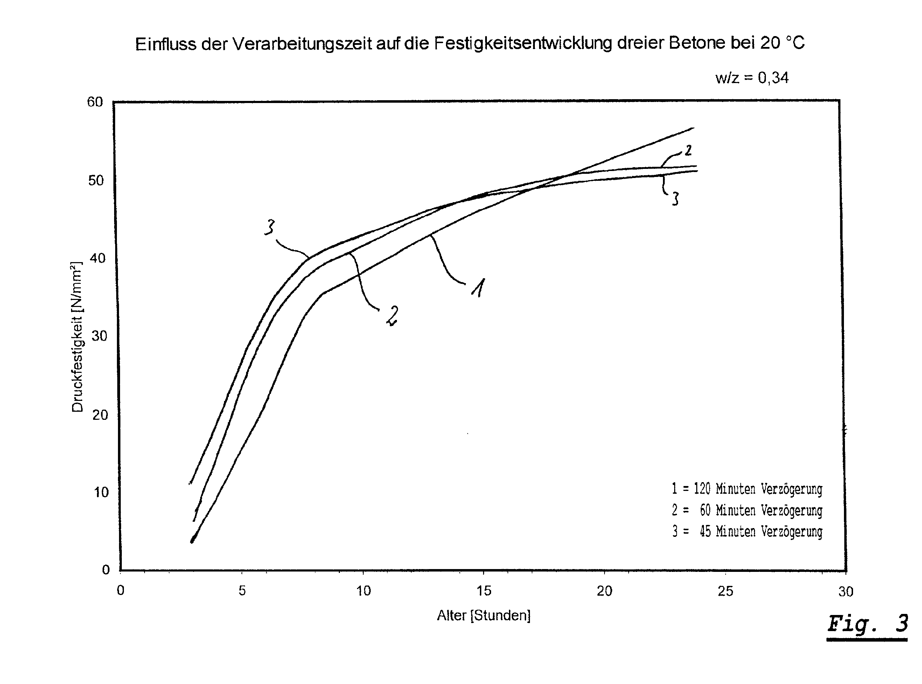

Nach dem Ende des Verarbeitungszeitraums entwickeln die Betone rasch eine hohe Festigkeit und erreichen z.B. nach 3 bis 24, insbesondere nach 6 bis 12 Stunden die für eine schnelle Verkehrsfreigabe erforderliche Festigkeit. Dies ergibt sich aus Fig. 3. Verwendet wurden gleiche Betonzusammensetzungen, bei denen lediglich die Verzögerungszeit mit unterschiedlichen Zusatzmittelmengen geändert wurde. Man erkennt, dass die Festigkeitsentwicklung nach Ablauf der Verzögerungszeit nahezu gleichbleibend schnell ist und zu nahezu gleichen Endfestigkeiten führt.

Es konnte im Rahmen der Erfindung herausgefunden werden, dass sich die Steuerbarkeit der Verarbeitungszeit und eine ausgeprägt höhere Strukturviskosität durch das Zusammenwirken von Klinkerfeinstmehl, Gluconsäure oder deren Salze und Alkalicarbonat ergibt. Dabei ist entscheidend und überraschend, dass Alkalicarbonat sowohl die Verzögerung unterstützt als auch die Festigkeitsentwicklung beschleunigt.

Die erfindungsgemäß ausgewählten hydraulischen, sulfatträgerfreien Bindemittel, die Calciumaluminate wie C₃A, CA, C₁₂A₇ und/oder Calciumaluminatferrite wie C₄AF enthalten, reagieren mit der Zusatzmittelkombination unter Bildung von Carboaluminaten, z.B. Monocarboaluminat, die normalerweise zum schnellen Erstarren führen. Die Verzögerung der Bildung dieser Carboaluminate gelingt nicht mit bekannten Verzögerern, zu denen auch Gluconate zählen, für normale hydraulische, Sulfatträger enthaltende Bindemittel. Wird lediglich Gluconat den ausgewählten hydraulischen Bindemitteln zugegeben, findet gleichwohl eine schnelle unverzögerte Erstarrung statt. Wird andererseits lediglich ein Alkalicarbonat zugesetzt, wird die Erstarrung noch beschleunigt.

Es ist daher unerklärlich, warum die erfindungsgemäß verwendete Zusatzmittelkombination offenbar die Carboaluminatbildung zwar nicht unterbindet, sie aber unmittelbar nach einer Gel- oder Keimbildung eine Zeit lang stoppt und damit die weitere Erstarrung hemmt.

Anhand der folgenden Tabellen 1 und 2 wird dies beispielhaft an Laborversuchsergebnissen verdeutlicht. Die Bindemittelmischungen wiesen gleiche, sehr hohe Feinheit (Feinstzemente) auf und wurden ohne Zusatzstoffe lediglich mit Wasser angemacht. In an sich bekannter Weise wurde die Hydratationswärmeentwicklung als Erkennungsmerkmal des Erstarrungsanfangs gemessen, der bei einem absoluten Wärmeflussmaximum liegt.

Da keine Zusatzstoffe verwendet wurden, die den Erstarrungsbeginn bekanntermaßen erheblich verzögern, liegt der Erstarrungsbeginn in höheren Stundenbereichen als bei technisch hergestellten Betonen oder Mörtelmischungen; die Ergebnisse verdeutlichen aber gleichwohl tendenziell den gleichen Einfluss, der sich im Beton oder Mörtel ergibt.

Tabelle 1 lässt erkennen, dass normaler Feinstportlandzement bei einer Gluconat-/Alkalicarbonatzugabe beschleunigt reagiert (Gluconat wirkt bei Portlandzementen normaler Feinheit in Anwesenheit eines Sulfatträgers verflüssigend und damit verzögernd).

**Tabelle 1,**

| Einfluss der Zugabe von Alkalicarbonat (Beschleuniger) und Na-Glucoheptonat-Anhydrat (Verzögerer) auf den Erstarrensanfang von normalem Portlandzement enthaltend als Sulfatträger Gips in Form von β-Halbhydrat: | | | |
|---|---|---|---|
| **Bindemittelmischung** | | | **Hydratations- wärmeentwicklung** |
| Feinstzement (beinhaltet 2% β-Halbhydrat) [%] | Beschleuniger K₂CO₃ [%] | Verzögerer [%] | Erstarrensanfang (Lage des absoluten Wärmeflussmaximums) |
| 100,00 | 0,0 | 0,00 | 1 h 13 min |
| 99,88 | 0,0 | 0,12 | < 0 h 20 min |

Tabelle 2 verdeutlicht dagegen, dass die erfindungsgemäß verwendete Zusatzmittelkombination sulfatträgerfreie Bindemittelmischungen steuerbar verzögert. Es ergibt sich keine verflüssigende Wirkung, sondern offenbar eine Hemmung der Kristallisation oder des Wachstums von Carboaluminathydraten, z.B. von Monocarboaluminathydrat.

**Tabelle 2,**

| Einfluss der Zugabemengen von Alkalicarbonat Natrium-Glucoheptonat-Anhydrat auf den Erstarrensanfang sulfatträgerfreiem Portlandzementklinkermehl: und von | | | |
|---|---|---|---|
| **Bindemittelmischung** | | | **Hydrata- tionswär- meentwick- lung** |
| sulfatträgerfreies Klinkermehl [%] | Beschleuniger K₂CO₃ [%] | Verzögerer [%] | Erstarrensanfang (Lage des absoluten Wärmeflussmaximums) |
| 99,88 | 0,0 | 0,12 | 0 h 23 min |
| 99,76 | 0,0 | 0,24 | 0 h 36 min |
| 98,94 | 1,0 | 0,06 | 1 h 02 min |
| 98,88 | | 0,12 | 3 h 42 min |
| 98,82 | | 0,18 | 8 h 44 min |
| 98,76 | | 0,24 | > 12 h |
| 97,94 | 2,0 | 0,06 | 1 h 26 min |
| 97,88 | | 0,12 | 8 h 14 min |
| 97,82 | | 0,18 | 8 h 31 min |
| 98,88 | 1,0 | 0,12 | 3 h 42 min |
| 97,88 | 2,0 | | 8 h 14 min |
| 96,88 | 3,0 | | 10 h 03 min |
| 95,88 | 4,0 | | > 12 h |

Besonders vorteilhaft wirkt die erfindungsgemäße Zusatzmittelkombination, wenn sie in Mol-Verhältnissen von Carbonat zu Gluconsäure von 30:1 bis 10:1, insbesondere von 24:1 bis 12:1 verwendet wird.

Anstelle von Alkalicarbonaten können - wie bereits erwähnt - auch Alkalihydrogencarbonate verwendet werden; die Carbonate können aber auch in Kombination eingesetzt werden. Der Gluconbestandteil ist hauptsächlich Gluconsäure und deren Salze wie Natrium-Gluconat, Natrium-Glucoheptonat, Natrium-Glucoheptonat-Anhydrat und Glucono-delta-Lacton.

## Patentansprüche

1. Schnell zement-Bindemittelmischung zur Herstellung verzögerter, schnellerhärtender Betone oder Mörtelmischungen, insbesondere mit erhöhter Strukturviskosität, bestehend aus
a) mindestens einer sulfatträgerfreien, hydraulischen Calciumaluminate und/oder Calciumaluminatferrite enthaltenden Bindemittelkomponente,
b) einer Monocarboaluminathydrat, insbesondere Calciummonocarboaluminathydrat bildenden Zusatzmittelkombination bestehend aus
b1) mindestens einer Gluconkomponente,
b2) mindestens einer wasserlöslichen, Carbonationen spendenden Verbindungskomponente.

2. Bindemittelmischung nach Anspruch 1,
**dadurch gekennzeichnet, dass**
die Komponente b1) Gluconsäure und/oder deren Salze enthält.

3. Bindemittelmischung nach Anspruch 2,
**dadurch gekennzeichnet, dass**
die Komponente b1) Natriumgluconat und/oder Natrium-Glucoheptonat und/oder Natrium-Glucoheptonat-Anhydrat enthält.

4. Bindemittelmischung nach Anspruch 2 und/oder 3,
**dadurch gekennzeichnet, dass**
die Komponente b1) Glucono-delta-Lacton enthält.

5. Bindemittelmischung nach einem oder mehreren der Ansprüche 1 bis 4,
**dadurch gekennzeichnet, dass**
die Komponente b1) zur Steuerung der Verarbeitungszeit in Mengen zwischen 0,05 und 2,5, vorzugsweise zwischen 0,15 und 1 Masse-% bezogen auf die Bindemittelkomponente vorliegt.

6. Bindemittelmischung nach einem oder mehreren der Ansprüche 1 bis 5,
**dadurch gekennzeichnet, dass**
die Komponente b2) mindestens ein Alkalicarbonat enthält.

7. Bindemittelmischung nach Anspruch 6,
**dadurch gekennzeichnet, dass**
die Komponente b2) mindestens ein Alkalihydrogencarbonat enthält.

8. Bindemittelmischung nach Anspruch 6 und/oder 7,
**dadurch gekennzeichnet, dass**
die Komponente b2) zur Steuerung der Verarbeitungszeit und der Beschleunigung des Erhärtens, insbesondere auch des Erstarrens, in Mengen zwischen 0,5 und 4, insbesondere zwischen 1 und 3 Masse-% bezogen auf die Bindemittelkomponente vorliegt.

9. Bindemittelmischung nach einem oder mehreren der Ansprüche 1 bis 8,
**dadurch gekennzeichnet, dass**
dass die Komponenten b1) und b2) zur Steuerung der Verarbeitungszeit und insbesondere auch der Beschleunigung des Erhärtens im Mol-Verhältnis b2) :b1) von 30:1 bis 10:1, insbesondere von 24:1 bis 12:1 vorliegen.

10. Bindemittelmischung nach einem oder mehreren der Ansprüche 1 bis 9,
**dadurch gekennzeichnet, dass**
die Calciumaluminate der Bindemittelkomponente in Form von C₃A und/oder CA und/oder C₁₂A₇ und/oder C₄AF vorliegen.

11. Bindemittelmischung nach einem oder mehreren der Ansprüche 1 bis 10,
**dadurch gekennzeichnet, dass**
die Bindemittelkomponente in Form von Feinstmehl mit Korngrößen von d₉₅ ≤ 24 µm, insbesondere d₉₅ ≤ 12,5 µm vorliegt.

12. Bindemittelmischung nach Anspruch 11,
**dadurch gekennzeichnet, dass**
die Bindemittelkomponente zur Steuerung der Verarbeitungszeit und/oder Festigkeit aufgrund der Erhärtung in mindestens einer gesichteten Kornfraktion vorliegt.

13. Bindemittelmischung nach Anspruch 12,
**dadurch gekennzeichnet, dass**
die Bindemittelkomponente in mindestens einer der folgenden gesichteten Fraktionen vorliegt:

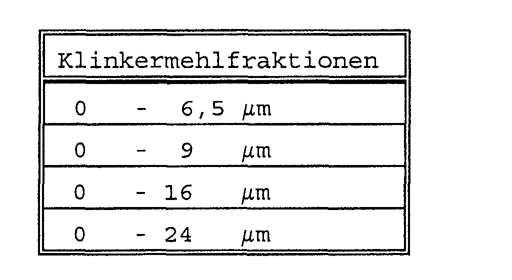

14. Bindemittelmischung nach einem oder mehreren der Ansprüche 1 bis 13,
**dadurch gekennzeichnet, dass**
die Bindemittelkomponente zur Steuerung der Verarbeitungszeit und der Festigkeit aufgrund der Erhärtung in mindestens einem der folgenden gesichteten Kornbänder vorliegt:

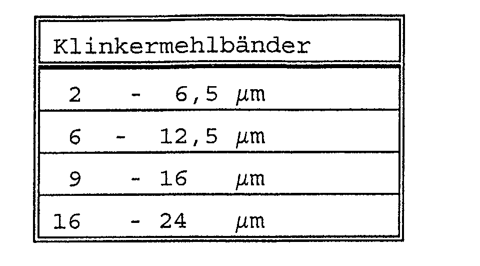

15. Bindemittelmischung nach einem oder mehreren der Ansprüche 11 bis 14,
**dadurch gekennzeichnet, dass**
die Bindemittelkomponente ein Portlandzementklinkerfeinstmehl enthält.

16. Bindemittelmischung nach einem oder mehreren der Ansprüche 11 bis 14,
**dadurch gekennzeichnet, dass**
die Bindemittelkomponente ein Portlandzementklinkerfeinstmehl ist.

17. Bindemittelmischung nach einem oder mehreren der Ansprüche 11 bis 15,
**dadurch gekennzeichnet, dass**
die Bindemittelkomponente Tonerdeschmelzzementmehl enthält.

18. Bindemittelmischung nach einem oder mehreren der Ansprüche 1 bis 17,
**dadurch gekennzeichnet, dass**
sie sulfatträgerfreie, latenthydraulische und/oder puzzolane Zusatzstoffe enthält, vorzugsweise in Mengen von 5-20 Masse-%, insbesondere von 7-18 Masse-%.

19. Bindemittelmischung nach einem oder mehreren der Ansprüche 1 bis 18,
**dadurch gekennzeichnet, dass**
sie sulfatträgerfreie inerte Gesteinsmehle, vorzugsweise in Mengen von 5-20 Masse-%, insbesondere von 7-18 Masse-% enthält.

20. Bindemittelmischung nach einem oder mehreren der Ansprüche 1 bis 19, insbesondere 11 bis 19,
**dadurch gekennzeichnet, dass**
die Komponente b) in trockener Pulverform mit einer Feinheit von d₉₅ ≤ 24 µm, insbesondere d₉₅ ≤ 12,5 µm vorliegt.

21. Bindemittelmischung nach einem oder mehreren der Ansprüche 1 bis 20,
**dadurch gekennzeichnet, dass**
sie aus folgenden Bestandteilen zusammengesetzt ist:
| | | |
|---|---|---|
| 80 - 90, | z.B. 87,8 Gew.-% | Portlandzementklinkerfeinstmehl, |
| 8 - 10, | z.B. 9,0 Gew.-% | Tonerdeschmelzzementfeinstmehl, |
| 2 - 4, | z.B. 3,0 Gew.-% | K₂CO₃/Na₂CO₃, |
| 0,1 - 0,3, | z.B. 0,2 Gew.-% | Natriumgluconat. |

22. Bindemittelmischung nach einem oder mehreren der Ansprüche 1 bis 21,
**dadurch gekennzeichnet, dass**
sie zumindest einen Teil, insbesondere einen überwiegenden Teil der für eine Beton- oder Mörtelherstellung vorgegebenen Sandkomponente in trockener Form enthält.

23. Verwendung einer Bindemittelmischung nach einem oder mehreren der Ansprüche 1 bis 22 zur Herstellung von Beton oder Mörtel durch Zugabe von Wasser und üblichen Zusatzstoffen in üblichen Mengen.

24. Verwendung nach Anspruch 23,
**dadurch gekennzeichnet, dass**
Transportbeton nach der Transportbetontechnologie hergestellt wird.

25. Verwendung nach Anspruch 23 und/oder 24,
**dadurch gekennzeichnet, dass**
Fahrbahndecken hergestellt werden.

26. Verwendung nach einem oder mehreren der Ansprüche 23 bis 25,
**dadurch gekennzeichnet, dass**
Frischbetone oder Frischmörtel hergestellt werden und während des Anmischens und/oder während des Einbaus insbesondere temperaturabhängig vorgegebene zusätzliche Mengen der Komponente b1) zugegeben werden.

27. Verwendung nach einem oder mehreren der Ansprüche 23 bis 26,
**dadurch gekennzeichnet, dass**
die Komponente b) zur Steuerung der Erhöhung der Strukturviskosität in entsprechend unterschiedlichen Mengen zugegeben wird.

28. Verwendung nach Anspruch 27,
**dadurch gekennzeichnet, dass**
die Zugabemenge auf das Einbaugefälle abgestellt zudosiert wird.

29. Verwendung nach Anspruch 27 und/oder 28,
**dadurch gekennzeichnet, dass**
die Strukturviskosität derart geregelt wird, dass ein Einbau bis zu einem Gefälle von 15 % ermöglicht wird.
